# EUROPEAN PATENT SPECIFICATION

(11) **EP 2 700 204 B1**
(45) Date of publication and mention of the grant of the patent: **03.06.2015**
(21) Application number: 12717100.7
(22) Date of filing: 19.04.2012
(51) Int. Cl.: H04L 12/721, H04L 12/725, H04L 12/723, H04L 12/927

(54) **Method for network resources allocation in TISPAN based service architectures**
Verfahren zur Netzwerkresourcenzuweisung bei Dienstarchitekturen auf TISPAN-Basis
Procédé d'attribution de ressources réseau dans des architectures de service s'appuyant sur TISPAN

(30) Priority: 19.04.2011 ES 201130632 P
(43) Date of publication of application: 26.02.2014
(73) Proprietor: Telefónica, S.A., 28013 Madrid (ES)
(72) Inventor: FERNÁNDEZ-PALACIOS GIMÉNEZ, Juan, Pedro, E-28013 Madrid (ES); JIMÉNEZ CHICO, Francisco, Javier, E-28013 Madrid (ES); GONZÁLEZ DE DIOS, Oscar, E-28013 Madrid (ES); TOVAR DE DUEÑAS, Alejandro, E-28013 Madrid (ES)
(74) Representative: Carpintero Lopez, Francisco
(86) International application number: PCT/EP2012/057173
(87) International publication number: WO 2012/143450

(56) References cited:
- EP-A1- 1 978 699
- US-A1- 2008 144 641
- Szymanski et al: "NOBEL phase 2 - Document Deliverable - D2.2 "Report on multilayer traffic engineering mechanisms for NOBEL solutions in medium and long term scenarios"", , 27 November 2007 (2007-11-27), page 1-10,132, XP002682452, Retrieved from the Internet: URL:http://www.ist-nobel.org/Nobel2/imatge s/D2%5B1%5D.2_v1.00.pdf [retrieved on 2012-08-27]
- Yannuzzi M et al: "one Deliverable D2.1 Definition of requirements and use cases", , 5 April 2011 (2011-04-05), page 1-53, XP002682453, Retrieved from the Internet: URL:http://www.ict-one.eu/images/deliverab les/onefp7-infso-ict-258300d2_1.pdf [retrieved on 2012-08-28]
- ENRIQUEZ GABEIRAS J ET AL: "Is multilayer networking feasible?", OPTICAL SWITCHING AND NETWORKING, ELSEVIER, NL, vol. 6, no. 2, 1 April 2009 (2009-04-01), pages 129-140, XP026145408, ISSN: 1573-4277, DOI: 10.1016/J.OSN.2009.02.004 [retrieved on 2009-03-04]

## Description

### TECHNICAL FIELD

The present invention relates generally to resources allocation in telecommunication networks and more particularly to a method for network resource allocation in current TISPAN (Telecommunications and Internet converged Services and Protocols for Advanced networking) based service architectures.

### DESCRIPTION OF THE PRIOR ART

The proposed invention aims to minimize the required network investments for QoS assurance in convergent networks supporting any kind of service. There are two main requirements for QoS control in converged networks supporting any kind of service:
- **Application awareness:** Application-aware networks are able to recognize the traffic from different applications and act accordingly. Application awareness is required in order to guarantee the appropriate QoS for different applications. For example, P2P (best effort) and videoconference (real time) supported over a common infrastructure.
- **Scalable QoS control mechanisms:** The QoS mechanisms (CAC, performance monitoring, QoS differentiated routing, etc) used in converged networks should be able to manage a huge volume of traffic coming from different users and applications.

Currently, a common application-aware network approach is based on the combination of existing technologies such as TISPAN (http://www.etsi.org/tispan/) and IMS (IP Multimedia Subsystem).

A TISPAN NGN (Next Generation Networks) is a packet-based network able to provide telecommunication services and able to make use of multiple broadband, QoS-enabled transport technologies and in which service-related functions are independent from underlying transport-related technologies. NGN networks include a control layer based on the IMS (IP Multimedia Subsystem) standard defined by 3GPP project. This standard was initially intended for mobile networks only but later on it was generalized for other access network technologies (fixed, WLAN, etc) but usually within the teleco scene.

TISPAN QoS control is based on the IMS specifications. According to TISPAN-IMS model, QoS control is based on the following principles:
- A central view is kept of all network resources
- Requests for network resources are accepted or denied individually and on request.
- Requests for network resources can be made by end users and by application service providers.
- Resources are reserved after a request has been accepted and released after the session has finished.
- Requests, acceptance and reservation of network resources can be handled independently for the upstream and downstream directions.

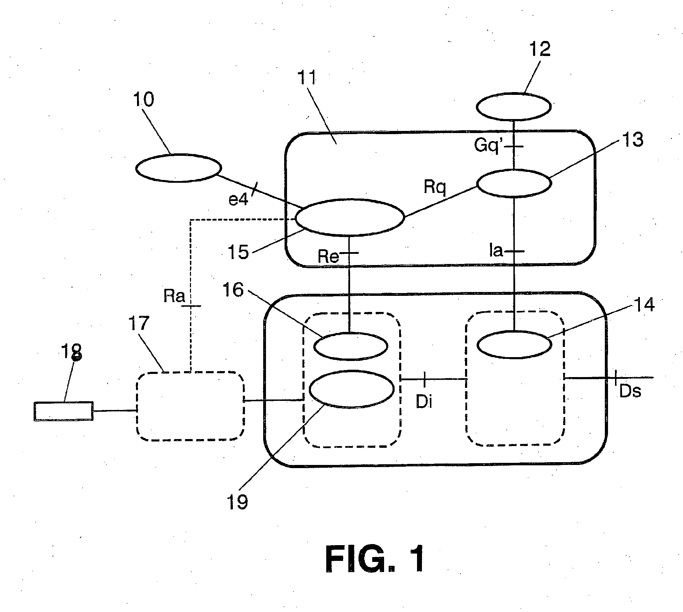

According to TISPAN definition, the Resource Admission Control Subsystem, RACS (11) is in charge of assuring the required QoS for each connection. In figure 1 is shown a block diagram of the RACS subsystem (11) accessing the transport layer of the MPLS transport network in a current TISPAN NGN network, including the names of the different interfaces.
- The Application Function, AF (12) communicates with the RACS to transfer dynamic QoS-related service information.
- A centralised functional entity (called SPDF, 13) decides the appropriate policy for a given requested service (policy push model).
- A packet to packet gateway for user plane media traffic (called C-BGF, 14) performs policy enforcement functions under the control of the SPDF.
- The Access-Resource and Admission Control Function, A-RACF(15) checks whether the requested QoS resources can be made available for the involved requested access (admission control). It also ensures that the request from the SPDF matches the access policies.
- The Resource Control Enforcement Function, RCEF (16) performs policy enforcement functions making use of policies defined by the access provider. The Access Node (17) is supposed to be a L2 equipment providing connectivity to the Customer Premises Equipment (CPE, 18). The Layer 2 Termination Function (L2TF, 19) is the point where the L2 communication with the CPE is terminated.
- The Network Attachment SubSystem (NASS, 10) dynamically provides IP addresses and other terminal configuration parameters as well as authentication and authorization (based on user profiles).

In TISPAN, the metropolitan (also known as metro networks) and core transport networks must support IP traffic. According to this approach, current application aware solutions are typically based on the interworking between TISPAN and IP based QoS control mechanisms. However, current model doesn't apply to other metro and core network models based on other transport technologies such as OTN (Optical Transport Network), SDH (Synchronous Digital Hierarchy), MPLS-TP (Transport Protocoll) or OBS (Optical Burst Switching) over WSON (Wavelength Switched Optical Networks).

Existing TISPAN over IP solutions present scalability problems in terms of processing power and costs:
▪ Processing power: Current application-aware networks, such as TISPAN-IMS, perform QoS differentiation in a per user flow basis. According to it, both C-BGF and SPDF requires high performance and processing power for policy activation and to handle a high number of individual IP flows. This approach could be feasible for low traffic volumes as the ones generated by voice services. However, some scalability problems might arise for increased traffic demands generated by video applications such as videoconference, HDTV, UHDT, etc.
▪ **Costs:** Current application aware solutions are typically based on the interworking between TISPAN and state of the art IP based QoS control mechanisms. Current IP backbones are often based on a hierarchy of routers interconnected through high speed point-to-point WDM (Wavelength Division Multiplexing). This architecture has proven to be very useful in the provision of IP residential and business services, due to the tremendous flexibility provided by IP routers. However, as the cost of electronic packet switching directly depends on the transmission rate, traditional IP architectures might present economic scalability problems for higher traffic demands generated by intensive bandwidth consuming applications such as 3D video, HDTV or UHDTV.

Szymaski et al, "NOBEL phase 2- Document Odiverable 02.2-"Report ou multilayer traffic engineering mechanisms for NOBEL solutions in medium and long term scenaries", 27-11-2007, XP 60268452, shown a method for improving network resource allocation in a TISPAN network using an MPLS based transport network, where an LSP 10 used per Class of Service (CoS) and traffic is observed at LSP level in order to perform rerouting or to change the bandwidth of the LSP.

### SUMMARY OF THE INVENTION

The present invention uses a new method and system that will reduce or eliminate the deficiencies of current tools.

The proposed invention describes a new interworking procedure between a ETSI (European Telecommunications Standards Institut) -TISPAN (Telecommunications and Internet converged Services and Protocols for advanced networking) based service layer architecture and a multilayer IETF (Internet Engineering Task Force)-GMPLS (Generalized Multiprotocol Label Switching) network architecture based on the combination of MPLS based packet transport technologies (e.g IP/MPLS, OBS, MPLS-TP) and GMPLS based circuit switching technologies (e.g SDH, OTN WSON).

Particularly, the proposed invention defines a communication procedure between TISPAN service layer architectures and multilayer GMPLS network architectures. It aims to minimize total network resources consumption of increasing traffic demands with different requirements in terms of bandwidth and QoS.

Packet flows generated from accepted TISPAN requests are allocated in a single packet based MPLS tunnel (e.g MPLS-TP or OBS) according to their destination and QoS requirements. MPLS tunnels are classified according to different classes of service. Traffic characteristics of each MPLS tunnel are monitored in order to assure that they are fulfilling the QoS requirements defined for each class of service. When traffic volume of a given class of service between two network nodes is above a certain capacity threshold then the packet based MPLS layer requests a direct circuit switched link (e.g wavelength switched link) between these nodes to the circuit based GMPLS layer, this circuit based GMPLS layer may be in an embodiment of the invention, an optical network.

In a first aspect, it is presented a method according to claim 1.

Finally, a computer program comprising computer program code means adapted to perform the above-described method is presented.

For a more complete understanding of the invention, its objects and advantages, reference may be had to the following specification and to the accompanying drawings.

### BRIEF DESCRIPTION OF THE DRAWINGS

To complete the description and in order to provide for a better understanding of the invention, a set of drawings is provided. Said drawings form an integral part of the description and illustrate a preferred embodiment of the invention, which should not be interpreted as restricting the scope of the invention, but rather as an example of how the invention can be embodied. The drawings comprise the following figures:
Figure 1 represents a block diagram of the resource and admission control subsystem in current TISPAN Networks.
Figure 2 represents a block diagram of the system architecture of an embodiment of the present invention.
Figure 3 represents a scheme of the service provision procedure with no available MPLS tunnel for the given class of service and destination in an embodiment of the present invention.
Figure 4 represents a scheme of the service provision procedure with traffic threshold exceeded for the class of service in an embodiment of the present invention.
Figure 5 represents a workflow of the global procedure according to an embodiment of the present invention.

Corresponding numerals and symbols in the different figures refer to corresponding parts unless otherwise indicated.

### DETAILED DESCRIPTION OF THE INVENTION

The proposed invention defines a communication procedure between TISPAN service layer architectures and multilayer GMPLS network architectures as sub-wavelength or WSON for example.

The proposed procedure is explained below:
1.- TISPAN RACS generates packet flow connectivity requests per individual user service (voice, video, data, etc) with QoS requirements (which will depend of the service required).
2.-Individual service requests with similar destination and QoS requirements are allocated in a single packet based MPLS tunnel (e.g MPLS-TP or OBS). MPLS tunnels are classified according to different classes of service.
3.-Traffic characteristics of each MPLS tunnel are monitored in order to assure that they are fulfilling the QoS requirements defined for each class of service (see Table 1).
4.-When traffic volume of a given class of service between two network nodes (i.e. in a certain MPLS tunnel) is above a certain capacity threshold then the packet based MPLS layer requests a direct circuit switched link (e.g wavelength switched link) between these nodes to the circuit based GMPLS layer, to route part of the traffic for the given class of service.
5.- Circuit path computation and assignment is based on specific algorithms per class of service and the information provided by GMPLS CS routing protocols and Optical Performance Monitoring tools.
6.-Once the path is computed, the circuit connection is established by means of GMPLS CS signaling protocols and part of the traffic which was routed through the tunnel is routed using this CS path so the traffic threshold is not exceeded.

**Table 1: QoS classification of applications**

| | **Blocking probability** | **Network availability** | **Set up time** | **Maximum delay** | **Mean delay** | **Packet loss rate** |
|---|---|---|---|---|---|---|
| **Real time** | < 0.1% | > 99.9% | < 1s | < 50 ms | * | < 5 E-5 |
| **Streaming** | < 0.1% | > 99% | < 1s | < 1s | * | < 1 E-3 |
| **Transactional** | < 1% | > 99% | < 3s | < 1s | < 200 ms | < 1 E-2 |
| **Best effort** | * | * | * | * | * | * |

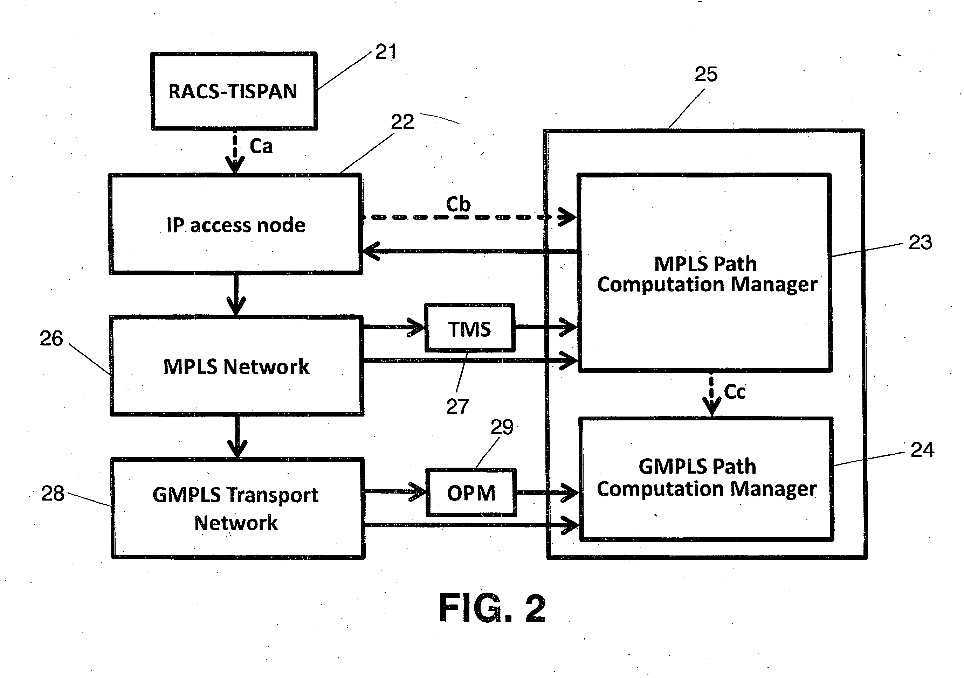

To carry out the procedure as initially described in the previous point, new interlayer interactions need to be defined. That is, the above disclosed procedure will take place at the communication interfaces between different elements of both service and network control planes, particularly Ca, Cb and Cc (non continuous lines in figure 2). The other elements of this architecture are out of the scope of the invention and could be based on state of the art solutions.

Figure 2 represents a block diagram of the system architecture of an embodiment of the present invention.

### Ca Interface:

At the arrival of a service request, the TISPAN A-RACF module of the Resource Admission Control Subsystem RACS (21) checks the subscriber QoS profile and requests individual network connections with specific QoS requirements to the access node (22) of the TISPAN Network (usually an IP access node). TISPAN A-RACF requests are distributed over the Ca interface, which is based on an extension of the standardized Re interface defined in ETSI TISPAN. In particular, the extension proposed in this invention is based on the introduction of a Class of Service (CoS) identification in the network connection request. A Class of Service would be defined according to specific QoS parameters. Table 1 shows an example of CoS classification (in Table 1, the "class of service" values will be "Real Time", "Streaming" "Transactional" of "Best Effort").

The messages distributed over the Ca interface (that is, between the RACS TISPAN subsystem and the IP Access node (22)), to implement the above disclosed procedure are the following:
∘ Connection_request: This message is sent per individual user service by TISPAN A-RACF to the IP access node, in order to establish a MPLS network connection according to the following parameters (included in the message): Destination node, Bandwidth, Class of Service required and QoS requirements (that is, the requested value of QoS parameter as delay, jitter, blocking probability, network availability, etc.).
∘ Connection_remove: This message is sent by TISPAN A-RACF in order to remove a given MPLS packet connection per individual service

Note that this functionality of the IP Access Node extends the functionality of RCEF module defined by TISPAN in order to allow it to dynamically establish and tear down MPLS packet connections (e.g. MPLS-TP or OBS).

### Interface Cb

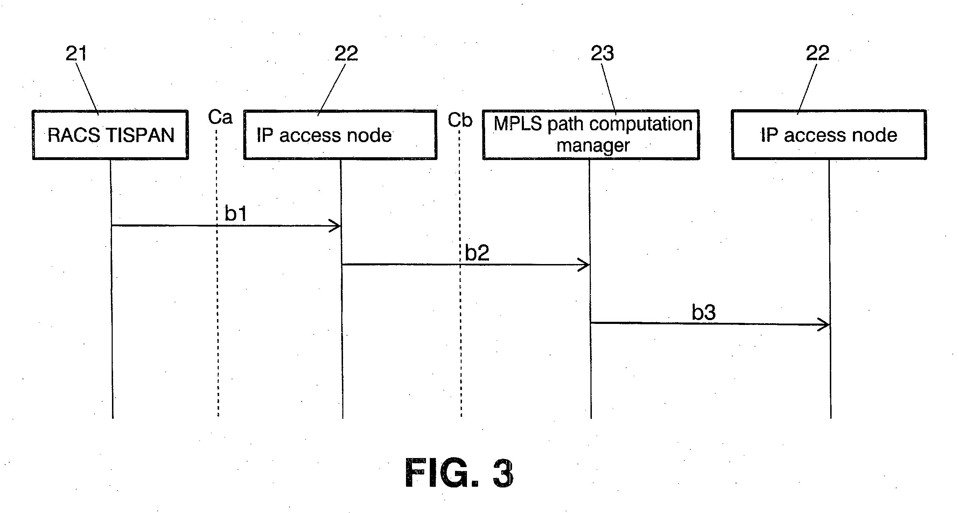

Individual user service requests with similar destination and QoS requirements are allocated in a single MPLS packet tunnel by the IP Access Node. As shown in Figure 3, if no tunnel with the required destination and QoS characteristics is available, then a tunnel request is sent by the IP Access Node to a node of the MPLS packet transport layer called MPLS Path Computation manager (23) over interface Cb. The Cb messages received by the MPLS Path Computation Manager are the following:
∘ Connection_request: This message is sent by the IP access node in order to establish a new MPLS packet tunnel with a class of service according to the following parameters (included in the message): Destination node, Bandwidth, Class of Service required and QoS requirements. With this information the MPLS Path Computation manager will calculate the best path (tunnel) to allocate to the connection, it will inform the IP access node about the calculated path and the IP access node will take the necessary actions to establish the new MPLS packet tunnel between the access node and the destination node through the MPLS Network (26).
∘ Connection_remove: This message is sent in order to remove a given MPLS packet tunnel

### Interface Cc

When traffic volume of a given class of service between two network nodes is above a certain capacity threshold then the MPLS Path Computation Manager requests a direct circuit switched link between these nodes to the circuit GMPLS layer over interface Cc (between the MPLS Path Computation Manager and a node of the GMPLS layer called GMPLS Path Computation Manager (24)). The Cc messages received by the GMPLS Path Computation Manager are the following:
∘ Connection_request: This message is sent by MPLS Path Computation Manager in order to establish a Circuit Switched connection (e.g over a WSON) according to the following parameters (included in the message): Source and destination node, Class of Service required, QoS requirements and the amount of traffic that the MPLS Packet Path Computation Manager wants to route through the circuit Switched Connection. With this information the GMPLS Path Computation manager will take the necessary actions to establish the new CS path.
∘ Connection_remove: This message is sent in order to remove a given Circuit Switched connection.

As an alternative embodiment of the invention, the connection requests message in these interfaces, only includes the Class of Service and not the QoS requirements. In another alternative embodiment, the connection request message include only the QoS requirements and not the Class of Service, and the node receiving the connection request, check in the database the Class of Service which corresponds to the given QoS requirements.

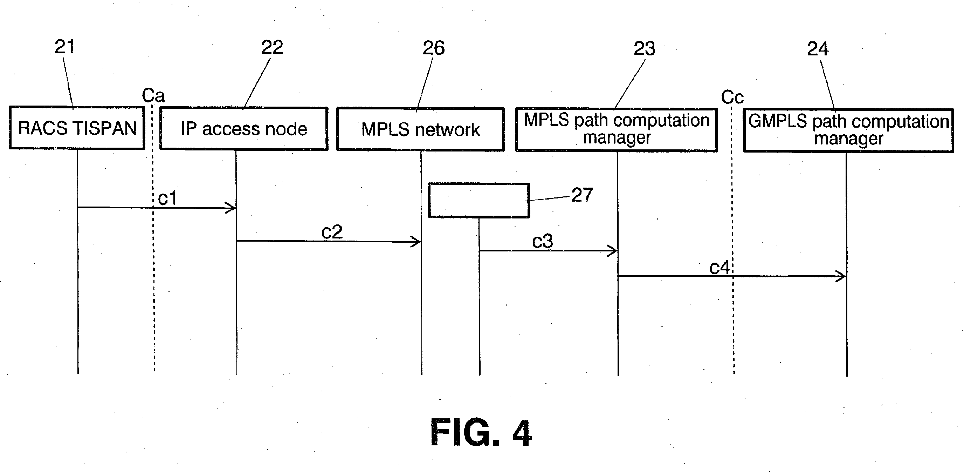

Depending on the network status, three main situations can happen:
a) Incoming service request with available MPLS tunnel with the desired destination node for the requested class of service. It is the simplest case. After the access node receives the connection request from the TISPAN RACS, it allocates the incoming user connection to the available MPLS packet tunnel. The process follows the steps below:
   a1.- TISPAN RACS generates packet flow connection requests per individual user service (voice, video, data, etc) and it sends it to the IP Access node over Ca interface.
   a2.-The Access Node checks that there is a tunnel with similar destination and QoS Requirements, so the incoming individual service request is allocated to the packet based MPLS tunnel (e.g MPLS-TP or OBS) and informs the IP Access Node.
b) Incoming service request with no available MPLS tunnel with the desired destination node for the requested class of service (see figure 3). In this case, the process follows the steps below:
   b1.- TISPAN RCAS generates packet flow connection requests per individual user service (voice, video, data, etc) and it sends it to the IP Access node.
   b2.-The IP Access node finds out that there is no available MPLS tunnel with the corresponding class of service for the requested destination, so a new one is requested to the MPLS Path Computation Manager (23). The procedure followed for the tunnel request is described below:
      b21.-After receiving the MPLS packet tunnel request sent by the IP Access Node over Cb, the MPLS Path Computation Manager (23) executes a path computation algorithm able to determine the optimum path over the MPLS packet layer according to:
         - The requirements of each request in terms of bandwidth destination and QoS
         - The information about network usage provided by nodes of the MPLS packet transport network as:
         - The MPLS routing protocol. Routing protocols could be based on the state of the art solutions.
         - The Traffic Monitoring System (27). Traffic characteristics of each MPLS tunnel that crosses the MPLS packet data plane are monitored by means of a Traffic Monitoring System (TMS). This information is sent to the MPLS Packet Path Computation Manager in order to assure that they are fulfilling the QoS requirements defined for each class of service. TMS could be based on the state of the art of traffic monitoring tools.
   b3) The MPLS Packet Path Computation Manager informs the IP Access Node about the calculated path and it establishes the tunnel by means of state of the art MPLS signaling protocols.
c) Traffic threshold exceeded for the class of service (see figure 4). In this case the MPLS packet tunnel is available for the requested destination and the requested Class of Service but the allocation of the incoming connection makes the traffic volume of the related class of service between two nodes overcome a predefined capacity threshold. Due to that, the MPLS path computation manager requests a direct circuit switched link between these nodes to the circuit GMPLS layer (which can be for example, a WSON subsystem) over Cc. The process follows the steps below:
   c1.- TISPAN RCAS generates packet flow connection requests per individual user service (voice, video, data, etc) and it sends it to the MPLS IP access node.
   c2.-The IP access node checks that there is a tunnel with similar destination and QoS Requirements, so the individual service request is allocated to the packet based MPLS tunnel (e.g MPLS-TP or OBS) and informs the MPLS network (26).
   c3.- The TMS (27) inform the MPLS path computation manager (23) that the traffic of the MPLS tunnel exceeds the traffic threshold for said tunnel Class of Service.
   c4- The MPLS path computation manager (23) sends a connection requests to a node of the GMPLS CS subsystem, the Circuit Switched Path Computation Manager (24). When this node receives the connection requests, it computes the best switched path for the connection requests. The circuit path computation is based on specific algorithms per class of service and the information provided by state of the art GMPLS routing protocols and Performance Monitoring tools (29) (Optical Performance Monitoring tools, if the GMPLS CS transport network is optical) of the GMPLS transport network (28). Once the path is computed, the GMPLS transport network is informed and it establishes the circuit by means of state of the art GMPLS signaling protocols and the traffic indicated in the connection requests is transferred from the tunnel to said established circuit connection. Traffic characteristics of each CS circuit path that crosses the CS packet data plane are monitored by means of the Performance Monitoring Tools which inform the CS Path Computation Manager.

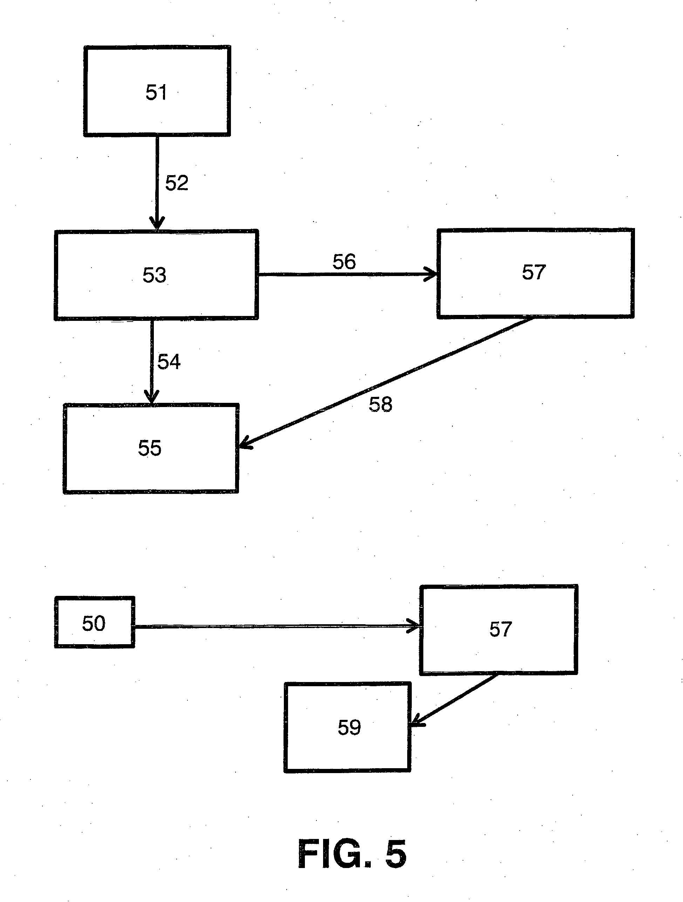

Summarizing, the global procedure workflow is the following (figure 5).

The TISPAN RACS subsystem (51) sends an Individual Connection request (52) to the IP Access Node. The request includes destination node of the connection, bandwidth, Class of Service and QoS parameters.

The IP Access Node checks if there is any connection available with said destination and supporting the requested Class of service (53).

If there is an available tunnel with said destination and supporting the requested Class of service, said tunnel is allocated to the connection and the MPLS network (55) is informed (54) so the connection is established.

If not, a new MPLS packet tunnel is requested (56) to the MPLS Path Computation Manager (57) of the MPLS transport network. The request includes destination node of the connection, bandwidth, Class of Service and QoS parameters. Once the MPLS path is found, the MPLS network is informed (58) so the tunnel is established by means of state of the art MPLS signaling protocols.

If the traffic threshold is exceeded for a Class of Service between two nodes, the TMS (50) informs the MPLS Path Computation Manager (57) and it requests a direct circuit switched link between the two nodes to the GMPLS Path Computation Manager (59).

The system formed by the MPLS Packet Path Computation Manager and the CS Path Computation Manager is called QoS aware Path Computation Manager (25).

The proposed invention aims to fulfill the requirements in terms of automatic operation, dynamicity and QoS assurance of a TISPAN-IMS service architecture while optimizing total network costs by using and optimizing combination of MPLS packet switching transport technologies (e.g. MPLS-TP or OBS) and circuit switching transport technologies (e.g., WSON) instead of current solutions based on costly IP based switching technologies. The novelty of the invention resides on the extension of mentioned dynamicity and QoS assurance from Access Network (already provided by TISPAN) to the Core Network (unattended at the moment). The proposed new interfaces make possible the end to end control of QoS.

Although the present invention has been described with reference to specific embodiments, it should be understood by those skilled in the art that the foregoing and various other changes, omissions and additions in the form and detail thereof may be made therein without departing from the scope of the invention as defined by the following claims.

## Claims

1. A method for improving the network resources allocation in a TISPAN network, when a network user requests at least one communication service between an IP access node (22) of the TISPAN network and a destination node, the TISPAN network using an MPLS packet based transport network, the method comprising the following steps:
a) The Resource Admission Control Subsystem, RACS (21, 51) of the TISPAN network generates a packet flow connection request per communication service requested by the user, the connection request includes the Destination node, the bandwidth needed, the Class of Service required and the QoS requirements, then said connection request is sent (52) to the IP access node (22).
b) When the IP access node (22) receives the request, it checks (53) if there is an available MPLS tunnel with said destination node and supporting the required Class of Service.
c) If there is an available MPLS tunnel with said destination node and supporting the required Class of Service, the IP access node (22) allocates said packet flow connection request to the available MPLS tunnel, and the communication requested in the packet flow connection request is established using said MPLS tunnel and then, going to step g)
d) If there is no available MPLS tunnel with said destination node and supporting the required Class of Service, the IP access node (22) sends a tunnel request (b2; 56) to a node of the MPLS layer called MPLS Path Computation manager (23; 57), the tunnel request includes destination node, bandwidth needed, the Class of Service required and the QoS requirements.
e) The MPLS Computation manager (23; 57), after receiving the tunnel request executes a path computation algorithm able to determine the optimum MPLS packet tunnel over the MPLS packet network according to the bandwidth, required Class of Service and information about the packet network usage
f) Once the MPLS packet tunnel is calculated, the MPLS Path Computation manager (23; 57) will inform (b3) the IP access node (22) about the calculated path and the IP access node will take the necessary actions to establish the new MPLS packet tunnel between the IP access node (22) and the destination node through the MPLS Network (26; 55) and the communication requested in the packet flow connection request is established using said MPLS tunnel
g) Traffic characteristics of each MPLS tunnel is being monitored by a module of the MPLS network, called Traffic Monitoring System (27; 50) if this node detects that the traffic volume of a given class of service in a tunnel between two network nodes, is above a predefined capacity threshold, it sends (c3) an alert to the MPLS Path Computation Manager (23;57).
h) After receiving the alert, the MPLS Path Computation Manager (23;57) sends (c4) a circuit switched connection request to a module of a GMPLS circuit switched based transport network called GMPLS Path Computation manager (24;59), the request including source and destination node of the tunnel whose capacity has been exceeded, the amount of traffic that the MPLS Packet Path Computation Manager (23;57) wants to route through the circuit Switched Connection, the Class of Service required and the QoS requirements.
i) When the GMPLS Path Computation manager (24;59) receives the circuit switched (24;59) connection request, it calculates the optimum circuit switched path according to the amount of traffic that the MPLS Packet Path Computation Manager wants to route through the circuit Switched Connection, the Class of Service and information about the GMPLS circuit switched network
j) Once the circuit switched path is computed, the GMPLS circuit connection between the two nodes is established using said optimum circuit switched path

2. A method according to any of the previous claims where the TISPAN network is a TISPAN next generation network, NGN.

3. A method according to any of the previous claims where the QoS parameters included in the connection request are selected from the group comprised by delay, jitter, blocking probability, network availability, set up time, mean delay and packet loss rate.

4. A method according to any of the previous claims where the service requested is voice or video or data transmission.

5. A method according to any of the previous claims where the class of service can be real time or streaming or transactional or best effort.

6. A method according to any of the previous claims where the information about the Packet network usage comprises information about the traffic and the routing protocol of the MPLS network.

7. A method according to any of the previous claims where the information about the GMPLS network usage information comprises information about the traffic and the routing protocol of the GMPLS network provided by nodes of the GMPLS transport network.

8. A method according to any of the previous claims where the predefined capacity threshold depends on the class of service of the communications allocated to the tunnel.

9. A method according to any of the previous claims where the GMPLS circuit switched based transport network and/or the MPLS packet based transport technologies are optical transport technologies.

10. A method according to any of the previous claims where the GMPLS circuit switched based transport technologies can be Wavelength Switched Optical Networks, WSON, technologies.

11. A method according to any of the previous claims where MPLS packet based transport technologies can be MPLS-TP or Optical Burst Switching, OBS technologies.

12. A computer program comprising computer program code means adapted to perform the method according to any claims from 1 to 10 when said program is run on a computer, a digital signal processor, a field-programmable gate array, an application-specific integrated circuit, a micro-processor, a micro-controller, or any other form of programmable hardware.

## Patentansprüche

1. Ein Verfahren zum Verbessern der Netzwerkressourcenzuordnung in einem TISPAN-Netzwerk, wenn ein Netzwerknutzer zumindest einen Kommunikationsdienst zwischen einem IP-Zugriffsknoten (22) des TISPAN-Netzwerks und einem Bestimmungsknoten anfordert, wobei das TISPAN-Netzwerk ein MPLS-paketbasiertes Transportnetzwerk verwendet, wobei das Verfahren folgende Schritte aufweist:
(a) Das Ressourcenzulassungssteuerteilsystem, RACS (21; 51) des TISPAN-Netzwerks erzeugt eine Paketflussverbindungsanforderung pro Kommunikationsdienst, der durch den Nutzer angefordert wird, wobei die Verbindungsanforderung den Bestimmungsknoten, die benötigte Bandbreite, die erforderliche Dienstklasse und die QoS-Anforderungen umfasst, dann wird die Verbindungsanforderung an den IP-Zugriffsknoten (22) gesendet (52).
(b) Wenn der IP-Zugriffsknoten (22) die Anforderung oder Anfrage empfängt, prüft (53) derselbe, ob es einen verfügbaren MPLS-Tunnel mit dem Bestimmungsknoten gibt, der die erforderliche Dienstklasse unterstützt.
(c) Falls es einen verfügbaren MPLS-Tunnel mit dem Bestimmungsknoten, der die erforderliche Dienstklasse unterstützt, gibt, ordnet der IP-Zugriffsknoten (22) die Paketflussverbindungsanforderung dem verfügbaren MPLS-Tunnel zu, und die Kommunikation, die in der Paketflussverbindungsanforderung angefordert wird, wird unter Verwendung des MPLS-Tunnels eingerichtet und dann weiter zu Schritt g).
(d) Falls es keinen verfügbaren MPLS-Tunnel mit dem Bestimmungsknoten gibt, der die erforderliche Dienstklasse unterstützt, sendet der IP-Zugriffsknoten (22) eine Tunnelanforderung (62; 65) an einen Knoten der MPLS-Schicht, der als MPLS-Pfadberechnungsverwalter (23; 57) bezeichnet wird, wobei die Tunnelanforderung Bestimmungsknoten, benötigte Bandbreite, erforderliche Dienstklasse und die QoS-Anforderungen umfasst.
(e) Der MPLS-Berechnungsverwalter (23; 57) führt, nachdem er die Tunnelanforderung empfängt, einen Pfadberechnungsalgorithmus aus, der in der Lage ist, den optimalen MPLS-Pakettunnel über das MPLS-Paketnetzwerk zu bestimmen, gemäß der Bandbreite, erforderlichen Dienstklasse und der Information über die Patketnetzwerknutzung.
(f) Sobald der MPLS-Pakettunnel berechnet ist, informiert (63) der MPLS-Pfadberechnungsverwalter (23; 57) den IP-Zugriffsknoten (22) über den berechneten Pfad und der IP-Zugriffsknoten führt die notwendigen Schritte aus, um den neuen MPLS-Pakettunnel zwischen dem IP-Zugriffsknoten (22) und dem Bestimmungsknoten durch das MPLS-Netzwerk (26; 55) einzurichten, und die Kommunikation, die in der Paketflussverbindungsanforderung angefordert wird, wird unter Verwendung des MPLS-Tunnels eingerichtet.
(g) Verkehrscharakteristika jedes MPLS-Tunnels werden durch ein Modul des MPLS-Netzwerks überwacht, das als Verkehrsüberwachungssystem (22; 50) bezeichnet wird, falls dieser Knoten erfasst, dass das Verkehrsvolumen einer bestimmten Dienstklasse in einem Tunnel zwischen zwei Netzwerkknoten über einem vordefinierten Kapazitätsschwellenwert liegt, sendet (c3) derselbe eine Warnung an den MPLS-Pfadberechnungsverwalter (23; 57).
(h) Nach dem Empfangen der Warnung sendet (c4) der MPLS-Pfadberechnungsverwalter (23; 57) eine leitungsgeschaltete Verbindungsanforderung an ein Modul eines GMPLS-leitungsgeschaltet-basierter-Transport-Netzwerks, das als GMPLS-Pfadberechnungsverwalter (24; 59) bezeichnet wird, wobei die Anforderung Quelle und Bestimmungsknoten des Tunnels, dessen Kapazität überschritten wurde, die Menge an Verkehr, die der MPLS-Paketpfadberechnungsverwalter (23; 57) durch die leitungsgeschaltete Verbindung leiten möchte, die erforderliche Dienstklasse und die QoS-Anforderungen umfasst.
(i) wenn der GMPLS-Pfadberechnungsverwalter (24; 59) die leitungsgeschaltete Verbindungsanforderung empfängt, berechnet derselbe den optimalen leitungsgeschalteten Pfad gemäß der Menge an Verkehr, die der MPLS-Paketpfadberechnungsverwalter durch die leitungsgeschaltete Verbindung leiten möchte, der Dienstklasse und der Information über das GMPLSleitungsgeschaltete Netzwerk.
(j) sobald der leitungsgeschaltete Pfad berechnet ist, ist die GMPLS-Schaltungsverbindung zwischen den zwei Knoten unter Verwendung des optimalen leitungsgeschalteten Pfads eingerichtet.

2. Ein Verfahren gemäß einem der vorhergehenden Ansprüche, bei dem das TISPAN-Netzwerk ein TISPAN-Netzwerk der nächsten Generation, NGN, ist.

3. Ein Verfahren gemäß einem der vorhergehenden Ansprüche, bei dem die QoS-Parameter, die in der Verbindungsanforderung enthalten sind, von der Gruppe ausgewählt sind, die Verzögerung, Jitter, Sperrwahrscheinlichkeit, Netzwerkverfügbarkeit, Einrichtzeit, mittlere Verzögerung und Paketverlustrate umfasst.

4. Ein Verfahren gemäß einem der vorhergehenden Ansprüche, bei dem der angeforderte Dienst eine Sprach- oder Video- oder Datenübertragung ist.

5. Ein Verfahren gemäß einem der vorhergehenden Ansprüche, bei dem die Dienstklasse Echtzeit oder Streaming oder transaktionsbasiert oder größte Bemühung (Best Effort) sein kann.

6. Ein Verfahren gemäß einem der vorhergehenden Ansprüche, bei dem die Information über die Paketnetzwerknutzung eine Information über den Verkehr und das Leitungsprotokoll des MPLS-Netzwerks aufweist.

7. Ein Verfahren gemäß einem der vorhergehenden Ansprüche, bei dem die Information über die GMPLS-Netzwerknutzungsinformation eine Information über den Verkehr und das Leitungsprotokoll des GMPLS-Netzwerks, bereitgestellt durch die Knoten des GMPLS-Transportnetzwerks, aufweist.

8. Ein Verfahren gemäß einem der vorhergehenden Ansprüche, bei dem der vordefinierte Kapazitätsschwellenwert von der Dienstklasse der Kommunikationen abhängt, die dem Tunnel zugeordnet ist.

9. Ein Verfahren gemäß einem der vorhergehenden Ansprüche, bei dem die GMPLS-leitungsgeschaltet-basierter-Transport-Netzwerk- und/oder die MPLS-paketbasierter-Transport-Technologie optische Transporttechnologien sind.

10. Ein Verfahren gemäß einem der vorhergehenden Ansprüche, bei dem die GMPLSleitungsgeschaltet-basierter-Transport-Technologien Wellenlängenschaltungsoptiknetzwerk-, WSON-, Technologien sein können.

11. Ein Verfahren gemäß einem der vorhergehenden Ansprüche, bei dem MPLSpaketbasierter-Transport-Technologien MPLS-TP- oder OBS- (Optical Burst Switching) Technologien sein können.

12. Ein Computerprogramm, das die Computerprogrammcodeeinrichtung aufweist, die angepasst ist, um das Verfahren gemäß einem der Ansprüche 1 bis 10 durchzuführen, wenn das Programm auf einem Computer, einem Digitalsignalprozessor, einem feldprogrammierbaren Gatterarray, einer anwendungsspezifischen integrierten Schaltung, einem Mikroprozessor, einem Mikrocontroller oder jeder anderen Form von programmierbarer Hardware ausgeführt wird.

## Revendications

1. Procédé pour améliorer l'allocation des ressources de réseau dans un réseau TISPAN, lorsqu'un utilisateur du réseau demande au moins un service de communication entre un noeud d'accès IP (22) du réseau TISPAN et un noeud de destination, le réseau TISPAN utilisant un réseau de transport basé sur des paquets MPLS, le procédé comprenant les étapes suivantes :
a) Le sous-système de contrôle d'admission des ressources, RACS (21, 51) du réseau TISPAN génère une demande de connexion de flux de paquets par un service de communication demandé par l'utilisateur, la demande de connexion comprend le noeud de destination, la bande passante nécessaire, la classe de service requise et les exigences de qualité de service ; ladite demande de connexion est alors envoyée (52) au noeud d'accès IP (22).
b) Lorsque le rioeud d'accès IP (22) reçoit la demande, il vérifie (53) s'il existe un tunnel MPLS disponible avec ledit noeud de destination et supportant la catégorie de service requise.
c) S'il y a un tunnel MPLS disponible avec ledit noeud de destination et supportant la classe de service requise, le noeud d'accès IP (22) alloue ladite demande de connexion de flux de paquets au tunnel MPLS disponible, et la communication demandée dans la demande de connexion de flux de paquets est établie en utilisant ledit tunnel MPLS ; puis le processus passe à l'étape g).
d) S'il n'y a pas de tunnel MPLS disponible avec ledit noeud de destination et supportant la classe de service requise, le noeud d'accès IP (22) envoie une demande de tunnel (b2 ; 56) à un noeud de la couche MPLS appelé gestionnaire de calcul de chemin MPLS (23 ; 57), la demande de tunnel comprend un noeud de destination, la bande passante nécessaire, la classe de service requise et les exigences de qualité de service.
e) Le gestionnaire de calcul MPLS (23 ; 57), après réception de la demande de tunnel, exécute un algorithme de calcul de chemin capable de déterminer le tunnel de paquets MPLS optimal à travers le réseau par paquets MPLS en fonction de la largeur de bande, de la classe de service requise et des informations sur l'utilisation du réseau par paquets.
f) Une fois que le tunnel de paquets MPLS a été calculé, le gestionnaire de calcul de chemin MPLS (23 ; 57) informera (b3) le noeud d'accès IP (22) à propos du chemin calculé et le noeud d'accès IP exécutera les actions nécessaires pour établir le nouveau tunnel de paquets MPLS entre le noeud d'accès IP (22) et le noeud de destination à travers le réseau MPLS (26 ; 55) et la communication demandée dans la demande de connexion de flux de paquets est établie au moyen dudit tunnel MPLS.
g) Des caractéristiques de trafic de chaque tunnel MPLS sont surveillées par un module du réseau MPLS, appelé système de surveillance du trafic (27 ; 50). Si ce noeud détecte que le volume de trafic d'une classe de service donnée dans un tunnel entre deux noeuds de réseau est supérieur à un seuil de capacité prédéfini, il envoie (c3) une alerte au gestionnaire de calcul de chemin MPLS (23 ; 57).
h) Après avoir reçu l'alerte, le gestionnaire de calcul de chemin MPLS (23 ; 57) envoie (c4) une demande de connexion par commutation de circuits à un module d'un réseau de transport basé sur la commutation de circuits GMPLS appelé gestionnaire de calcul de chemin GMPLS (24 ; 59), la demande comprenant une source et un noeud de destination du tunnel dont la capacité a été dépassée, la quantité de trafic que le gestionnaire de calcul de chemin par paquets MPLS (23 ; 57) souhaite router à travers la connexion par commutation de circuits, la classe de service requise et les exigences de qualité de service.
i) Lorsque le gestionnaire de calcul de chemin GMPLS (24 ; 59) reçoit la demande de connexion par commutation de circuits, il calcule le chemin à commutation de circuits optimal en fonction de la quantité de trafic que le gestionnaire de calcul de chemin par paquets MPLS souhaite router à travers la connexion à commutation de circuits, la classe de service requise et les exigences de qualité de service.
j) Une fois que le chemin à commutation de circuits calculé, la connexion de circuit GMPLS entre les deux noeuds est établie à l'aide dudit chemin à commutation de circuit optimal.

2. Procédé selon l'une quelconque des revendications précédentes, dans lequel le réseau TISPAN est un réseau de nouvelle génération TISPAN, NGN.

3. Procédé selon l'une des revendications précédentes où les paramètres de qualité de service inclus dans la demande de connexion sont sélectionnés dans le groupe comprenant : le retard, la gigue, la probabilité de blocage, la disponibilité du réseau, le temps d'établissement, le temps de propagation moyen et le taux de perte de paquets.

4. Procédé selon l'une quelconque des revendications précédentes, dans lequel le service demandé est un service vocal, ou un service vidéo ou une transmission de données.

5. Procédé selon l'une des revendications précédentes, dans lequel la classe de service peut être du temps réel, du streaming, un service transactionnel ou au mieux.

6. Procédé selon l'une quelconque des revendications précédentes, dans lequel les informations concernant l'utilisation du réseau par paquets comprennent des informations concernant le trafic et le protocole de routage du réseau MPLS.

7. Procédé selon l'une quelconque des revendications précédentes, dans lequel les informations concernant les informations d'utilisation du réseau GMPLS comprennent des informations concernant le trafic et le protocole de routage du réseau GMPLS fournies par des noeuds du réseau de transport GMPLS.

8. Procédé selon l'une quelconque des revendications précédentes, dans lequel le seuil de capacité prédéfini dépend de la classe de service des communications allouées au tunnel.

9. Procédé selon l'une quelconque des revendications précédentes, dans lequel le réseau de transport basé sur la commutation de circuits GMPLS et/ou les technologies de transport basées sur des paquets MPLS sont des technologies de transport optiques.

10. Procédé selon l'une quelconque des revendications précédentes, dans lequel les technologies de transport basées sur la commutation de circuits GMPLS peuvent être des technologies de réseaux optiques à commutation de longueurs d'onde, WSON.

11. Procédé selon l'une quelconque des revendications précédentes, dans lequel les technologies de transport basées sur des paquets MPLS peuvent être des technologies MPLS-TP ou de commutation optique en rafale, OBS.

12. Programme informatique comprenant des moyens de code de programme informatique conçus pour exécuter le procédé selon l'une quelconque des revendications 1 à 10 lorsque ledit programme est exécuté sur un ordinateur, un processeur de signal numérique, un réseau prédiffusé programmable, un circuit intégré à application spécifique, un microprocesseur, un microcontrôleur, ou toute autre forme de matériel programmable.
